(19) Europäisches Patentamt
European Patent Office
Office européen des brevets

(11) Veröffentlichungsnummer: **0 262 235 B1**

# (12) EUROPÄISCHE PATENTSCHRIFT

(45) Veröffentlichungstag der Patentschrift: -
08.08.90

(51) Int. Cl.⁵: **B05B 7/22**, B05B 13/04, B25J 17/02, B25J 19/00

(21) Anmeldenummer: 86112122.6

(22) Anmeldetag: 02.09.86

(54) Vakuumplasmaspritzanlage.

(43) Veröffentlichungstag der Anmeldung:
06.04.88 Patentblatt 88/14

(45) Bekanntmachung des Hinweises auf die Patenterteilung:
08.08.90 Patentblatt 90/32

(84) Benannte Vertragsstaaten:
AT BE CH DE FR GB IT LI NL SE

(56) Entgegenhaltungen:
AT-B- 371 284
DE-A- 3 043 830

(73) Patentinhaber: THE PERKIN-ELMER CORPORATION,
761 Main Avenue, Norwalk Connecticut 06859-0181(US)

(72) Erfinder: Höhle, Hans-Michael, Dr., Stahlbühlring 151,
D-6802 Ladenburg(DE)
Erfinder: Pick, Werner, Ostring 7, D-6483 Bad Soden-Salmünster(DE)
Erfinder: Malakas, Michael, Birkenhainer Strasse 5,
D-6464 Linsengericht(DE)

(74) Vertreter: Patentanwälte Grünecker, Kinkeldey, Stockmair & Partner, Maximilianstrasse 58,
D-8000 München 22(DE)

## Beschreibung

Die Erfindung betrifft eine Vakuumplasmaspritzanlage mit einer Arbeitskammer, in der ein Werkstück angeordnet werden kann, mit einer Einrichtung zur Erzeugung eines Vakuums in der Arbeitskammer und mit einem in der Arbeitskammer angeordneten Plasmabrenner, dessen Lage bezüglich des Werkstücks über eine motorgetriebene Antriebsmechanik und eine entsprechende Steuerung in wenigstens einer Bewegungsrichtung verändert werden kann.

Eine Vakuumplasmaspritzanlage ist aus der DE-OS 30 43 830 bekannt.

Mit solchen Vakuumplasmaspritzanlagen ist es möglich, Werkstücke mit einem Überzug zu versehen, der im Plasmaspritzverfahren aufgetragen wird. Das Werkstück wird dazu in der Arbeitskammer angeordnet. Die Arbeitskammer wird dann evakuiert. Mit dem Brenner wird dann das pulverförmige Material auf das Werkstück in dünnen Schichten aufgespritzt.

Um sämtliche Bereiche des Werkstücks zuverlässig mit der gewünschten Schicht überziehen zu können, ist der Plasmabrenner mit einem Antriebs-und Steuermechanismus verbunden, der es ermöglicht, den Plasmabrenner in wenigstens einer Bewegungsrichtung bezüglich des Werkstücks zu verfahren. Die Bewegungsfreiheitsgrade, die der Brenner für seine Bewegung haben sollte, richten sich im allgemeinen nach dem zu bearbeitenden Werkstück.

Bei der in der DE-OS 30 43 830 beschriebenen Anlage sind die wesentlichen zum Antrieb des Brenners benötigten Teile, d.h. die gesamte Antriebsmechanik, innerhalb der Arbeitskammer angeordnet. Die Antriebsmechanik ermöglicht drei Bewegungsrichtungen des Plasmabrenners, nämlich eine vertikale Bewegung zum Einstellen des Spritzabstandes, eine translatorische Bewegung in der Achse des Werkstücks (Hin- und Herbewegung des Brennermanipulators) sowie ein Schwenkbewegung.

Für diese Bewegungen ist ein mechanisch aufwendiges Bewegungssystem erforderlich, welches, wie erwähnt, sich innerhalb der Arbeitskammer befindet. So sind verschiedene Führungsstangen, Kardangelenke, Teleskope, Zahnstangen mit Ritzel offen in der Arbeitskammer untergebracht, so daß die außerordentlich aggressive Atmosphäre der Arbeitskammer (Vakuum, Hitze, Staub) die gesamte Mechanik beeinflussen kann. Die Zuverlässigkeit des gesamten Antriebsystems ist daher sehr in Frage gestellt, da es durch die genannten Umgebungsbedingungen innerhalb der Arbeitskammer schnell zu Fehlern bzw. Störungen in den mechanischen Antrieben kommen kann.

Ein weiterer Nachteil dieser bekannten Anlage liegt darin, daß durch das Verlegen der gesamten Mechanik in die Arbeitskammer hinein eine sehr große Oberfläche entsteht, auf der sich Staub ablagern kann. Der Staub kann sich ferner in Nischen oder Hohlräumen ablagern, so daß er nicht ohne weiteres wieder entfernt werden kann. Eine solche Mechanik weist außerdem eine Vielzahl von engen Spalten und Hohlräumen auf, die schwer evakuierbar sind. Beim Abpumpen der Arbeitskammer strömt daher noch lange Zeit aus diesen Hohlräumen und Spalten Restsauerstoff, der den Beschichtungsvorgang negativ beeinflußt.

Bei einer anderen bekannten Plasmaspritzanlage dient zur Herstellung einer Bewegungsmöglichkeit des Plasmabrenners bezüglich des Werkstücks ein Roboter, der in der Arbeitskammer eingesetzt wird. Von der Kinematik her ist diese Anordnung geeignet, auch komplizierte Bauteile zu beschichten. Für das Beschichten werden der Roboter und der Drehtisch in die Kammer geschoben und die Tür wird geschlossen.

Dabei werden aber auch alle Komponenten, die sich innerhalb der Arbeitskammer befinden, extrem durch Hitze, Staub und Vakuum belastet. Dies gilt insbesondere für die komplizierte Mechanik des Roboters mit Antrieben und Meßsystemen sowie für den Drehtisch.

Auch bei dieser Lösung besteht der schwerwiegende Nachteil, daß eine Menge von Hohlräumen und Spalten existieren, die sowohl Pulver aufnehmen als auch Luftnester bilden. Beides führt zur Verschlechterung der inerten Atmosphäre und beeinträchtigt damit das Spritzergebnis negativ. Ein weiterer starker Nachteil dieser Anordnung ist, daß sich das gesamte System schwer reinigen läßt (man muß dazu wissen, daß beim Produktionsbetrieb in einer derartigen Plasmaspritzanlage pro Stunde typischerweise 1 bis 2 Kg Pulver bzw. Staub anfallen, die in der Kammer verbleiben).

Ausgehend von diesem Stand der Technik liegt der Erfindung die Aufgabe zugrunde, eine Vakuumplasmaspritzanlage der eingangs genannten Art derart auszugestalten, daß der Antrieb für den Plasmabrenner wesentlich weniger störungsanfällig ist und daß außerdem eine einfache Reinigung der Arbeitskammer möglich sein soll.

Gelöst wird diese Aufgabe bei einer Vakuumplasmaspritzanlage der eingangs genannten Art dadurch, daß die gesamte Antriebsmechanik und die Steuerung hermetisch gegenüber der Arbeitskammer abgeschlossen in Gehäuseteilen eines Manipulators untergebracht ist, der als Aufsatz an dem Behälter befestigt ist.

Durch die Anordnung aller Antriebe außerhalb der schädlichen Atmosphäre der Arbeitskammer treten keine Störungen durch Staub- und/oder Hitzeeinwirkungen beim Antrieb auf. Es können sich desweiteren in der Arbeitskammer keine Staubnester bilden oder Hohlräume, die beim Evakuieren zur Ausgasung führen könnten und dadurch die Schichtqualität erheblich verschlechtern würden. Die Oberfläche, die sich in der eigentlichen Arbeitskammer befindet, ist damit auf ein Minimum reduziert und kann in einfacher Weise gereinigt werden, da keine schwer zugänglichen Kanten und Ecken vorhanden sind.

In einer vorteilhaften Weiterbildung der Erfindung ist vorgesehen, daß die Antriebsmechanik im Manipulator drei Antriebsgruppen umfaßt, von denen die erste Antriebsgruppe eine Auf- und Abwärtsbewegung des Brenners zur Einstellung des Spritzabstandes, die zweite Antriebsgruppe eine Schwenkbewegung des Brenners um eine erste Horizontalachse und die dritte Antriebsgruppe eine Schwenkbewegung des Brenners um eine zweite, senkrecht zur ersten weisenden Horizontalachse ermöglicht. Mit diesen Merkmalen schafft der Manipulator die Möglichkeit, den Brenner um drei Achsen zu bewegen. Die erste Achse ermöglicht es, den Brenner zur Einstellung des Spritzabstandes auf- und abzufahren. Durch die zweite Achse wird eine Schwenkbewegung des Brenners quer zur Arbeitskammer und durch die dritte Achse eine Schwenkbewegung längs zur Arbeitskammer möglich. Die durch die beiden Horizontalachsen definierten Schwenkbewegungen sind um 90° gegeneinander versetzt, so daß sich eine große, vom Plasmabrenner erreichbare Beschichtungsfläche ergibt. Die dritte Antriebsgruppe ist dabei so ausgelegt, daß die Schwenkbewegung der zweiten Horizontalachse soweit erfolgen kann, daß der Brenner auch in horizontaler Richtung spritzen kann. Durch die Wahl der so definierten Bewegungsachsen des Brenners werden alle nötigen Bewegungen des Brenners zum Beschichten einer großen Anzahl auch komplizierter Werkstücke, wie z.B. Turbinenschaufeln,erreicht.

Durch die beiden Schwenkbewegungen, die dadurch möglich werden, lassen sich beispielsweise optimal Blattformen von Turbinenschaufeln ebenso wie das Schaufelprofil selbst optimal beschichten. Eine weitere vorteilhafte Ausgestaltung der Erfindung sieht vor, daß der Manipulator ein äußeres Gehäuse und ein im äußeren Gehäuse untergebrachtes inneres Gehäuse aufweist, daß im inneren Gehäuse die zweite und die dritte Antriebsgruppe hermetisch abgeschlossen angeordnet ist, wobei das innere Gehäuse in die Arbeitskammer hineinragt und an dem in der Arbeitskammer gelegenen Ende den Brenner trägt und daß die erste Antriebsgruppe zumindest teilweise im äußeren Gehäuse derart angeordnet ist, daß sie das innere Gehäuse anheben oder absenken kann.

Bei dieser Lösung sind somit die Antriebe für die beiden Schwenkbewegungen in einem eigenen inneren Gehäuse untergebracht, welches in einem äußeren Gehäuse durch die erste Antriebsgruppe angehoben oder abgesenkt werden kann.

Dabei wird bevorzugt das innere Gehäuse mittels Gleitführungen an sich im äußeren Gehäuse vertikal erstreckenden Gleitstangen geführt. Der Antriebsmotor für die erste Antriebsgruppe wird am äußeren Gehäuse angeflanscht. Um eine druck- und staubdichte Durchführung des Motorantriebs durch die äußere Gehäusewand sicherzustellen, ist eine geeignete Drehdurchführung an der Wand des äußeren Gehäuses angeordnet.

Bevorzugt ist die Drehdurchführung so ausgestaltet, daß mit zwei O-Ring-Dichtungen gearbeitet wird, wobei zwischen den O-Ring-Dichtungen eine Zwischenabsaugung erfolgt. Bei Leckagen wird somit zwischen den O-Ringen abgesaugt, so daß die Luft nicht in das Innere des Manipulators eindringen kann.

Das innere Gehäuse weist bei einer bevorzugten Ausführungsform die folgenden Teilgehäuse auf: Ein Antriebsgehäuse, in dem die Antriebsmotoren der zweiten und dritten Antriebsgruppe sowie Steuersysteme für die Antriebsgruppen untergebracht sind, ein sich dann zur Arbeitskammer hin anschließendes Zwischengehäuse, durch das Antriebswellen der beiden Antriebsgruppen verlaufen, ein Schwenkgehäuse mit einer zur zweiten Antriebsgruppe gehörenden Schwenkmechanik und ein Getriebegehäuse, welches fest mit dem Schwenkgehäuse verbunden ist und eine zur dritten Antriebsgruppe gehörende Antriebsmechanik aufweist, wobei der Brenner am Getriebegehäuse um die zweite Horizontalachse schwenkbar gelagert ist. Das innere Gehäuse besteht somit aus mehreren Teilgehäusen, die alle gegen die Arbeitskammer abgedichtet sind. Durch die einzelnen Gehäuse verlaufen die zur zweiten und dritten Antriebsgruppe gehörende Antriebsmechanik. Die Gehäuseteile schließen diese Antriebsmechanik hermetisch ab, wobei kein Staub in den Innenraum des inneren Gehäuses eindringen kann. Die Unterteilung des inneren Gehäuses in einzelne Teilgehäuse ermöglicht die einfache Montage und auch, falls erforderlich, den Austausch und die Wartung der in den einzelnen Teilgehäusen sich erstreckenden Teile der Antriebsmechanik. Zum Verbinden der einzelnen Teilgehäuse können Zwischenflansche vorgesehen sein, über die das Antriebsgehäuse, das Zwischengehäuse, das Schwenkgehäuse und das Getriebegehäuse jeweils vakuumdicht miteinander verbunden sind. Hierzu können beidseitig der jeweiligen Flansche in bekannter Weise O-Ring-Dichtungen oder dergl. verwendet werden.

Die zweite Antriebsgruppe umfaßt bei einer konkreten Ausgestaltung eine Antriebswelle, die vom Antriebsmotor der zweiten Antriebsgruppe über einen Keilriemen angetrieben wird und deren Drehbewegung im Schwenkgehäuse mit einer Schwenkmechanik in Schwenkbewegungen umgesetzt wird. Zur Umsetzung kann die Schwenkmechanik eine Spindel umfassen, die um eine Querachse schwenkbar mit der Antriebswelle verbunden ist und die einen Schlitten mit einem entsprechenden Innengewinde dreht, der in einer mit der Schwenkgehäuseinnenwand verbundenen Lagerlasche um eine quer zur Spindelachse weisende Achse schwenkbar gelagert ist. Mit dieser Schwenkmechanik wird die Drehbewegung der Antriebswelle in eine Schwenkbewegung des Schwenkgehäuses umgesetzt. Da das Getriebegehäuse fest mit dem Schwenkgehäuse verbunden ist und den Brenner trägt, läßt sich dadurch die Schwenkbewegung um die erste Horizontalachse mit einfachen Mitteln verwirklichen.

Die dritte Antriebsgruppe umfaßt bevorzugt die folgenden Teile: Eine Antriebswelle, die vom Antriebsmotor der dritten Antriebsgruppe über einen Keilriemen angetrieben wird und sich durch das Zwischengehäuse hindurch in das Schwenkgehäuse erstreckt, eine Kardanwelle, die die Antriebswelle durch das Schwenkgehäuse hindurch fortsetzt und ein im Getriebegehäuse angeordnetes Winkelgetriebe mit Zahnriemenübersetzung, welches die Drehbewegung der Antriebswelle in eine Schwenkbewegung des Brenners um die zweite Horizontalachse umsetzt. Mit diesen Merkmalen wird zum Schwenkantrieb des Brenners um die zweite Horizontalachse von dem im oberen Antriebsgehäuse hierfür angeordneten Antriebsmotor der Antrieb über geeignete Wellen abgeleitet, wobei die Welle im Schwenkgehäuse von einer Kardanwelle fortgesetzt wird. Dadurch kann der Antrieb in jeder Schwenkstellung des Schwenkgehäuses hindurch einfach erfolgen.

Es ist klar, daß die einzelnen Antriebsbewegungen durch die unabhängig voneinander angetriebenen Antriebsgruppen jeweils nur einzeln oder aber in überlagerten Bewegungsrichtungen erfolgen kann, so daß der Brenner in beliebige Raumrichtungen gerichtet werden kann.

Bei einer weiteren konkreten Ausgestaltung der Erfindung ist vorgesehen, daß auf dem Behälter ein Ansatzflansch ausgebildet ist, auf den das äußere Gehäuse vakuumdicht aufgeflanscht ist und durch den sich hindurch das innere Gehäuse mit seinen Teilgehäusen in die Arbeitskammer hinein erstreckt und daß am Ansatzflansch ein nach innen in den Arbeitsraum gerichteter Faltenbalg befestigt ist, der von außen vakuumdicht im Bereich des Flansches zwischen dem Zwischengehäuse und dem Schwenkgehäuse mit dem inneren Gehäuse verbunden ist. Dieser Faltenbalg bildet einen flexiblen Staub- und Hitzeschutz und schützt damit das äußere Gehäuse und Teile des inneren Gehäuses vor der starken in der Arbeitskammer herrschenden Hitze. Dieser Hitze- und Staubschutz ist als Faltenbalg ausgebildet, damit er die Auf- und Abbewegung des Brenners beim Anheben oder Absenken durch die erste Antriebsgruppe ohne Beeinträchtigung mit ausführen kann.

Der Faltenbalg erstreckt sich vorteilhaft seitlich etwa bis über das Schwenkgehäuse hinweg und ist mit einer kuppelartigen Einstülpung an dem Flansch zwischen dem Zwischengehäuse und dem Schwenkgehäuse befestigt. Durch diese Lösung überdeckt der Faltenbalg zumindest teilweise noch das Schwenkgehäuse und schützt dieses von außen ebenfalls gegen Staub und Hitze.

Gemäß einer weiteren bevorzugten Ausführung sind die Wände der Teilgehäuse des inneren Gehäuses und die Wände des äußeren Gehäuses zumindest teilweise doppelwandig ausgebildet und mit Anschlüssen zum Durchfließen von Kühlwasser zwischen den Doppelwänden versehen. Auf diese Art und Weise kann eine komplette Wasserkühlung der gesamten Mechanik stattfinden, so daß die Mechanik vollständig gegen Hitzeeinwirkung abgeschirmt ist.

Die vollständige hermetisch abgeschlossene Ausbildung des inneren Gehäuses ermöglicht es zunächst, die Antriebsmechanik im inneren Gehäuse optimal dadurch zu schützen, daß der Innenraum im inneren Gehäuse einmalig evakuiert wird und dann mit einem Edelgas, insbesondere mit Argon gefüllt wird. Die Argonfüllung hat einen Druck etwas über Atmosphärendruck und wird ständig überwacht. Durch die Verwendung von Argon besteht selbst bei Leckage keine Gefahr für den Spritzprozeß.

Der Innenraum des äußeren Gehäuses steht bevorzugt über eine staubdichte Verbindung mit der Arbeitskammer im Druckausgleich, d.h., zwischen dem Innenraum des äußeren Gehäuses und der Arbeitskammer kann ein Druckausgleich stattfinden.

Dadurch befindet sich im Innenraum des äußeren Gehäuses immer eine kalte, staubfreie Vakuumatmosphäre.

Im folgenden wird die Erfindung anhand eines in der Zeichnung beschriebenen Ausführungsbeispiels weiter erläutert und beschrieben. Dabei zeigt

Figur 1 eine Längsschnittdarstellung eines Teils einer Vakuumspritzanlage mit erfindungsgemäßem Manipulator und der Arbeitskammer,

Figur 2 zeigt einen Längsschnitt durch das Antriebsgehäuse,

Figur 3 zeigt eine Querschnittsdarstellung entlang der Linie II-II der Figur 2 durch das Antriebsgehäuse,

Figur 4 zeigt eine Längsschnittdarstellung durch das Schwenkgehäuse,

Figur 5 zeigt einen Schnitt durch das Schwenkgehäuse entlang der Linie IV-IV der Figur 4 und

Figur 6 zeigt einen Längsschnitt durch das Getriebegehäuse.

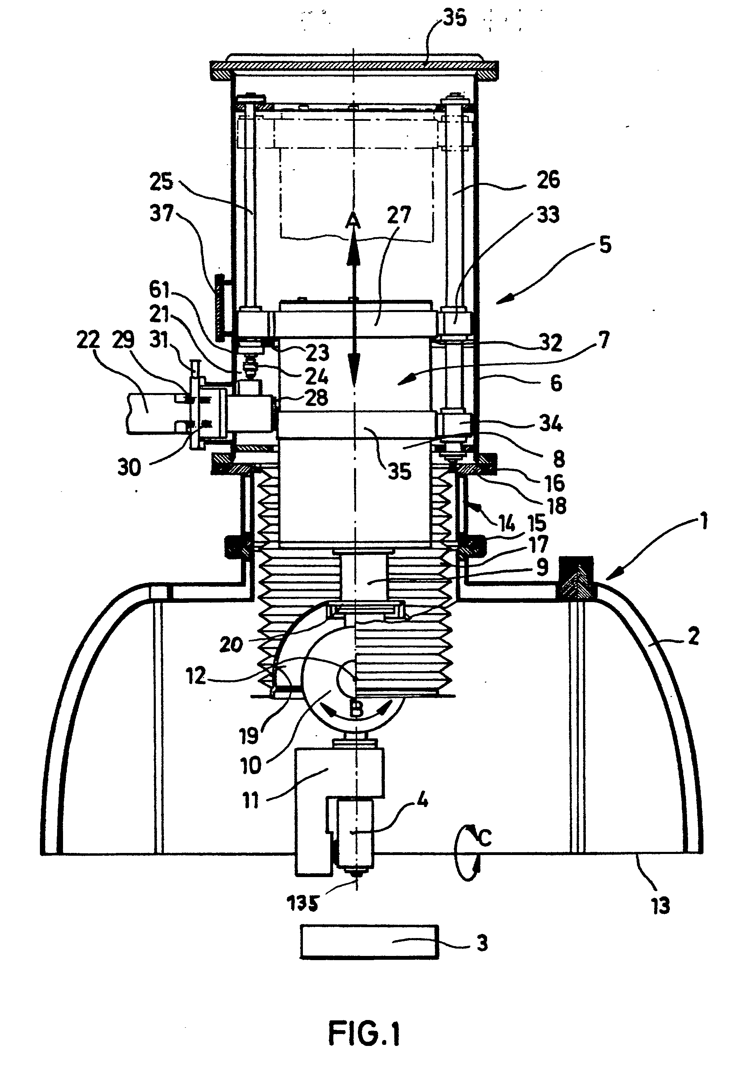

In Figur 1 ist die Vakuumplasmaspritzanlage insgesamt mit 1 bezeichnet. Von der Spritzanlage sind lediglich die im Zusammenhang mit der Erfindung wesentlichen Teile dargestellt. Die Plasmaspritzanlage umfaßt einen Behälter 2, in den ein Werkstück 3 eingebracht werden kann. Auf das Werkstück 3 soll in einer solchen Anlage mit Hilfe des Plasmabrenners 4 eine Beschichtung aufgetragen werden. Dieses Verfahren ist im Stand der Technik als Vakuum-Plasmaspritzverfahren bekannt.

Der erfindungsgemäße Manipulator ist insgesamt mit 5 bezeichnet und trägt den Brenner 4 an einem in die Arbeitskammer 2 hineinragenden Ende. Mit Hilfe des Manipulators 5 kann die Lage des Brenners 4 in noch näher zu beschreibender Weise gegenüber dem Werkstück 3 verändert werden.

Der erfindungsgemäße Manipulator 5 umfaßt ein äußeres Gehäuse 6, welches in der Art eines Turmes oben auf den Behälter über einen Aufsatzflansch 14 aufgesetzt und druckdicht abgeschlossen ist. Im äußeren Gehäuse ist an Führungsstangen 26 ein insgesamt mit 7 bezeichnetes inneres Gehäuse anhebbar und absenkbar geführt. Das innere Gehäuse besteht aus aneinandergeflanschten Teilgehäusen. Das obenliegende Gehäuse 8 ist das Antriebsgehäuse für eine noch näher zu beschreibende Antriebsmechanik. An dieses Antriebsgehäuse 8 schließt sich nach unten zur Arbeitskammer 2 hin ein Zwischengehäuse 9 an. Dieses Zwischengehäuse geht in ein Schwenkgehäuse 10 über, das seinerseits fest mit dem Getriebegehäuse 11 verbunden ist. Am Getriebegehäuse ist der Plasmabrenner 4 befestigt.

Mit diesem Manipulator 5 läßt sich der Brenner 4 um drei senkrecht zueinanderstehende Achsen bewegen. Die erste Bewegungsmöglichkeit ist durch den Pfeil A dargestellt und besteht aus einer Auf- und Abbewegung, wodurch sich der Abstand des Brenners 4 vom Werkstück 3 vergrößern bzw. verkleinern läßt. Neben dieser Verschiebemöglichkeit in vertikaler Richtung bestehen zwei Verschwenkmöglichkeiten um zwei senkrecht zueinanderstehende Horizontalachsen. Die erste Horizontalachse verläuft durch das Schwenkgehäuse 12 und ermöglicht es, den Brenner in Richtung des Pfeils B nach rechts oder links in der Zeichnung der Figur 1 zu verschwenken. Die zweite Horizontalachse 13 verläuft durch das Getriebegehäuse 11 und ermöglicht eine Schwenkbewegung des Brenners 4 entlang der beiden Drehrichtungen des Pfeiles C.

Wie der Figur weiter zu entnehmen ist, sitzt, wie bereits erwähnt, das äußere Gehäuse 6 auf dem Aufsatzflansch 14 auf und ist über diesen Flansch mit dem Behälter 2 verbunden. Um einen vakuumdichten Abschluß dieser Verbindungsstelle zu erhalten, sind O-Ringe 15 und 16 an dem Flanschkragen angeordnet. An der Innenöffnung des oberen Flanschkragens 18 des Aufsatzflansches 14 ist das obere Ende eines Faltenbalgs 17 fest angeordnet. Der Faltenbalg verläuft bis über die Horizontalebene der ersten Horizontalachse 12 des Schwenkgehäuses 10 hinein in den Behälter 2 und überdeckt das Zwischengehäuse 9 vollständig sowie das Schwenkgehäuse 10 zum Teil. Von der Unterseite her ist in dem Faltenbalg 17 eine kuppelartige Einstülpung 19 vorhanden, die bis zum Flansch 20 führt, über den das Zwischengehäuse 9 dicht mit dem Schwenkgehäuse 10 verbunden ist.

Dieser Faltenbalg dient als Hitze- und Staubschutz für den freien Raum zwischen dem äußeren Gehäuse 6 und dem inneren Gehäuse 7. Der Faltenbalg kann die Hub- und Senkbewegungen des inneren Gehäuses ohne Beschädigung mit ausführen.

Zur Hub- und Senkbewegung des inneren Gehäuses 7 und damit zur Veränderung des Spritzabstandes des Brenners zum Werkstück in vertikaler Richtung dient eine im gesamten mit 21 bezeichnete erste Antriebsgruppe, die im wesentlichen im äußeren Gehäuse 6 untergebracht ist.

Zu dieser ersten Antriebsgruppe 21 gehört ein Antriebsmotor 22, der durch die Gehäusewand 61 des äußeren Gehäuses 6 mit einer Drehdurchführung hindurchgeführt ist. Die Drehdurchführung umfaßt zwei in Axialrichtung der hindurchgeführten Welle 28 beabstandet zueinander angeordnete O-Ringe 29 und 30. Zwischen diesen beiden O-Ringen mündet eine Anschlußleitung 31, über die eine Zwischenabsaugung stattfinden kann. Der Antriebsmotor 22 wirkt über bekannte Mittel und Lager 24 auf die Spindel 25, die vom Motor angetrieben wird. Das innere Gehäuse 7 ist am Außenumfang mit einem Tragring 27 versehen, der dort fest angeschweißt (Schweißnaht 22) ist. Dieser Tragring 27 ist mit der Gewindemutter 31 verbunden, so daß über diese Mutter bei der Drehbewegung der Spindel 25 das innere Gehäuse 7 mittels des Tragrings angehoben wird. Auf der Spindel 25 im äußeren Gehäuse 6 gegenüberliegenden Seite sind zwei Führungsstangen 26 angeordnet, an denen das Gehäuse 7 mit entsprechenden Gleitführungen 33 und 34 über Tragring 27 und den darunter angeordneten Tragring 35 geführt wird.

Somit läßt sich das innere Gehäuse 7 innerhalb des äußeren Gehäuses 6 mit Hilfe der ersten Antriebsgruppe 21 in Richtung des Pfeiles A anheben oder absenken. Das äußere Gehäuse ist durch einen vakuumdichten Deckel 36 abgeschlossen und weist außerdem noch eine Anschlußmöglichkeit 37 auf, über die beispielsweise eine Vakuumpumpe oder dergl. angeschlossen werden kann. Insgesamt ist das Gehäuse 6 hermetisch abgedichtet und kann daher unter Vakuum gesetzt werden.

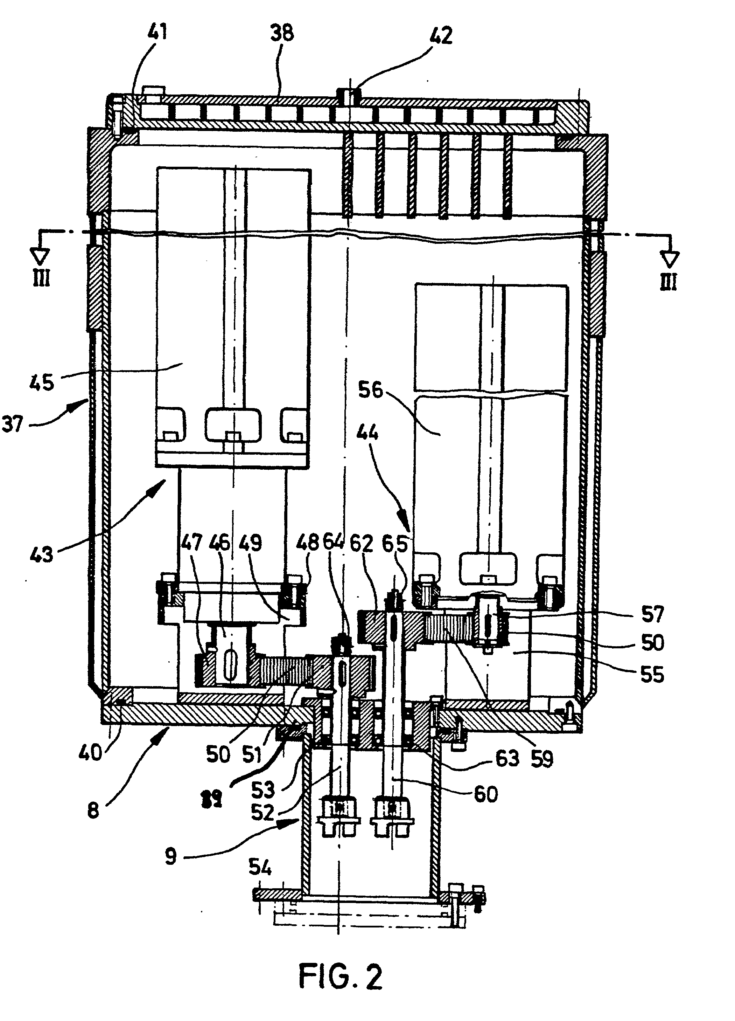

Im folgenden wird nun der Aufbau des inneren Gehäuses 7 mit den einzelnen Teilgehäusen 8, 9 10 und 11 beschrieben. In Figur 2 ist in einem Längsschnitt das Antriebsgehäuse 8 dargestellt. Es besitzt eine doppelwandige zylindrische Außenwand 37 und ist nach oben durch den Deckel 38 und nach unten durch den Boden 39 hermetisch abgeschlossen. Hierzu dienen jeweils O-Ringe 40 und 41 zwischen Boden bzw. Deckel und den Gehäusewänden. Der Deckel 38 ist außerdem doppelwandig ausgebildet und weist einen Anschluß 42 auf, über den Kühlwasser zum Kühlen des Deckels eingeleitet werden kann.

Im Inneren des Antriebsgehäuses 8 befinden sich nun Teile der beiden weiteren Antriebsgruppen 43 und 44. Zu der Antriebsgruppe 43 gehört der Motor 45, der eine Welle 46 antreibt, auf der aus dem Motor herausragenden Ende ein Zahnriemenrad sitzt. Der Motor 45 wird dabei über einen Flansch 48 auf dem Sockel 49 gehalten, der seinerseits auf dem Gehäuseboden 39 gehalten ist. Der Antrieb des Motors 45 wird über den Zahnriemen 50 und das Zahnriemenrad 51 auf die Antriebswelle 52 ist im Bereich des Bodens 39 in einem Drehlager 53 gelagert und abgestützt. Am unteren Ende der Antriebswelle 52, die in das Zwischengehäuse 9 hineinragt, befindet sich ein höhenverstellbarer Anschlußzapfen 54, über den die Antriebswelle 52 mit einer noch näher zu geschreibenden Kardanwelle zur Fortsetzung des Drehantriebs verbunden werden kann.

Die dritte Antriebsgruppe 44 umfaßt ebenfalls einen auf einem Sockel 55 gegenüber dem Gehäuseboden 39 abgestützen Motor 56, dessen Antrieb in ähnlicher Weise wie bei der zweiten Antriebsgruppe über ein auf der Motorwelle ruhendes Zahnriemenrad, einen Zahnriemen 59 und ein auf einer Antriebswelle 60 über ein auf diese Antriebswelle 60 aufgestecktes Zahnriemenrad 62 übertragen wird. Die Antriebswelle 60 ist ebenfalls über ein Lager 63 durch den Boden 39 in das Zwischengehäuse 9 hineingeführt.

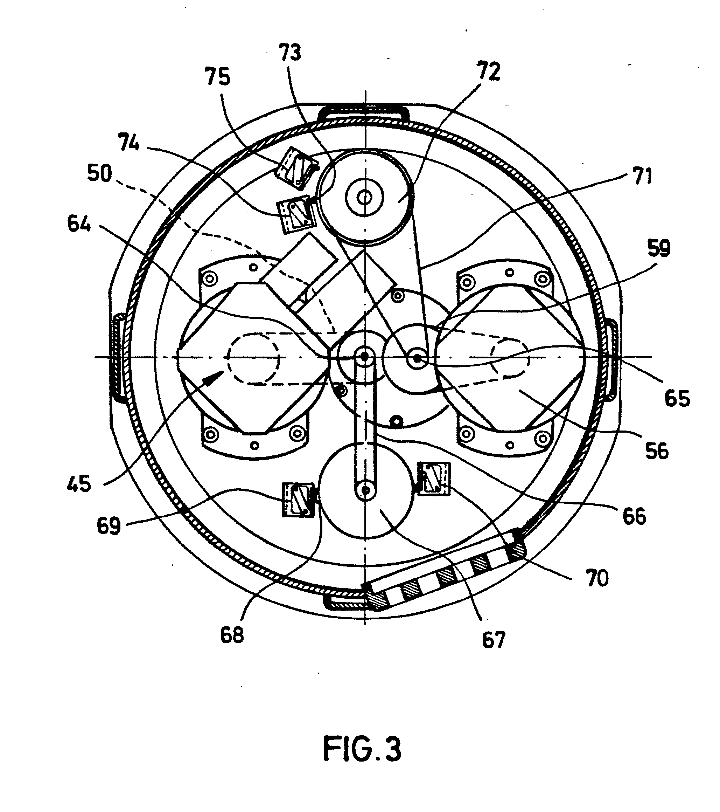

Wie aus der Figur 3 zu erkennen ist, die einen Schnitt entlang der Linie III-III der Figur 2 zeigt, sitzen in Drehverbindung mit den Antriebswellen 52 und 60 oberhalb der dort aufgesteckten Zahnriemenräder 51 bzw. 62 weitere Zahnriemenräder 64 und 65. Das Keilriemenrad 64 steht über einen Keilriemen 66 mit einem Steuerrad 67 in Verbindung.

Am Steuerrad 67 ist ein Steuernocken 68 angeordnet, der mit Druckschaltern 69 und 70 zusammenarbeitet. Diese Druckschalter 69 und 70 haben die Funktion von Endschaltern und dienen zur Steuerung des Antriebsmotors 45. Die Schalter sind dabei so voneinander entfernt, daß sie jeweils nach einer 180°-Drehung des Steuerrades 67 abschalten.

Vom Zahnriemenrad 65 führt der Zahnriemen 71 zu einem weiteren Steuerrad 72, das ebenfalls mit einem Steuernocken 73 versehen ist, welcher mit Endschaltern 74 und 75 zur Steuerung des Antriebsmotors 56 zusammenarbeitet. Damit sind auch die für die Motoren 56 und 45 benötigten mechanischen Steuermittel hermetisch abgedichtet in dem Antriebsgehäuse 8 untergebracht.

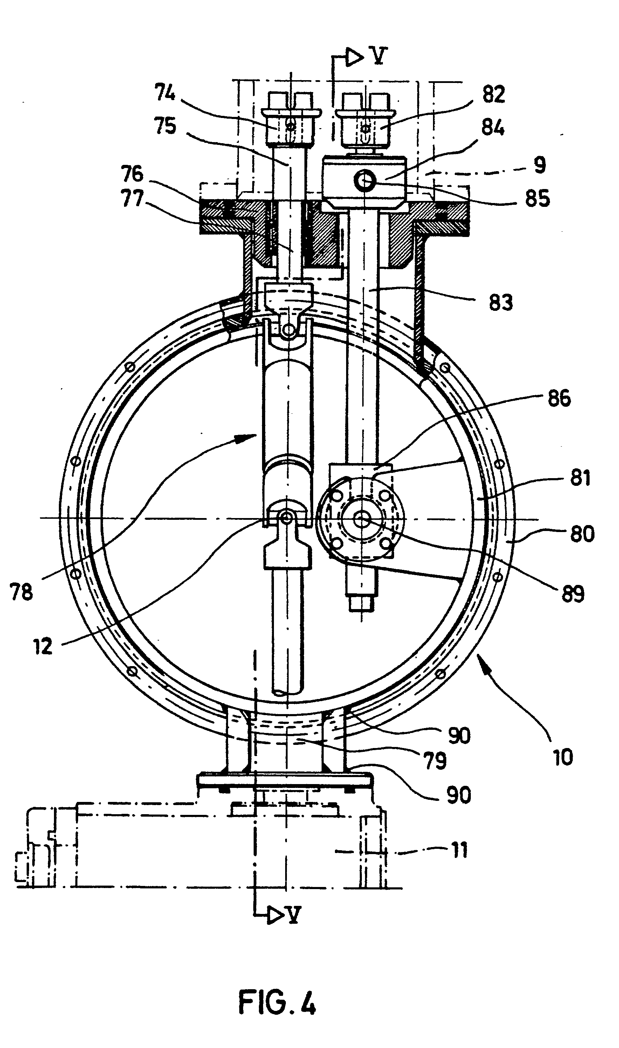

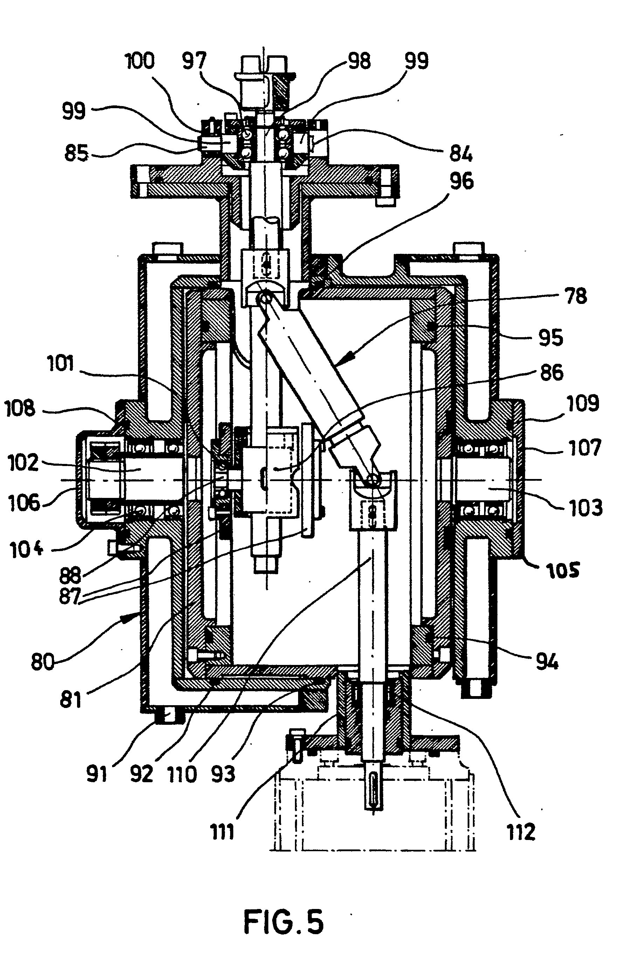

Im folgenden wird nun die Fortsetzung der ersten und zweiten Antriebsgruppe in dem Schwenkgehäuse 10 anhand der Figuren 4 und 5 weiter erläutert.

Die in das Zwischengehäuse 9 hineinragende Antriebswelle 52 (vgl. Figur 2) wird im Zwischengehäuse 9 mit Hilfe eines ebenfalls höhenverstellbaren Anschlußzapfens 74 an einen sich daran anschließenden Wellenabschnitt 75 drehfest angeschlossen. Der Wellenabschnitt 75 ist durch einen aufflanschbaren Decke 76 hindurch in das Zwischengehäuse 10 hineingeführt. In der Durchführung des Deckels 76 befindet sich ein Rollenlager 77. Die Antriebswelle 74 und der Wellenabschnitt 75 wird dann im Schwenkgehäuse 10 von einer Kardanwelle 78 fortgesetzt und durch einen Auslaß 79 nach unten in das Getriebegehäuse 11 weitergeleitet. Die Kardanverbindung ist notwendig, damit der Antrieb die Schwenkbewegungen des Schwenkgehäuses 10 mit ausführen kann.

Das Schwenkgehäuse 10 umfaßt ein äußeres Gehäuse 80, in dem innenliegend eine Trommel 81 angeordnet ist, die in dem Gehäuse 80 um die erste Horizontalachse 12 drehen kann. Zum Drehen der inneren Trommel 81 ist die Antriebswelle 60 (vgl. Figur 2) ebenfalls über einen Anschlußzapfen 82 in einer Spindel 83 fortgesetzt. Die Spindel ist in einem Lager 84 um eine quer zur Spindelachse weisende Horizontalachse 85 schwenkbar gelagert. Durch die Drehbewegung der Antriebswelle 60 wird die Spindel gedreht, auf der ein Schlitten 86 mit einem Innengewinde dadurch auf- und abgeführt werden kann. Der Schlitten 86 ist in zwei mit der Trommel 81 fest verbundenen Lagerlaschen 87 seitlich über die Lagerzapfen 88 um die Achse 89 schwenkbar gelagert. Durch eine Drehbewegung der Spindel 83, die bei einer Auf- und Abbewegung des Schlittens 86 in der Figur 4 nach links und rechts aufgrund der schwenkbaren Lagerung um die Achse 85 nach rechts und links ausweichen kann, kann somit die innere Trommel 81 nach links und rechts im Sinne des Pfeiles B der Figur 1 verschwenkt werden. Da das Gehäuse 11 mit der Trommel fest über die Schweißnähte 90 verbunden ist, führt somit das Getriebegehäuse 11 die Schwenkbewegungen der Trommel 81 um die erste Horizontalachse 12 mit aus. In Figur 5, die einen Schnitt entlang der Linie V-V in Figur 4 zeigt, ist zu sehen, daß das äußere Gehäuse 80 des Schwenkgehäuses 10 weitgehend doppelwandig ausgebildet ist und Anschlüsse für Kühlwasser aufweist, so daß das gesamte Schwenkgehäuse gekühlt werden kann. Die Trommel 81 ist hermetisch mit O-Ringen 92, 93, 94, 95, 96 abgedichtet, so daß auch bei der Schwenkbewegung gegenüber dem äußeren Gehäuse 80 keine Spalte oder Ritze entstehen, durch die Staub aus der Arbeitskammer eindringen könnte. In der Darstellung ist außerdem der Aufbau des Lagers 84 näher zu erkennen. Dieses Lager umfaßt ein Rillenlager 97 zur Drehdurchführung des Antriebswellenfortsatzes 98. Die Lagerzapfen 99 halten das Rillenlager 98 um die Achse 85 verschwenkbar in den Gleitlagern 100.

Der Antriebsschlitten 86 ist in zwei Lagerlaschen 87 in Rollenlagern 101 gelagert,über die dann der Antrieb auf die Lagerzapfen 99 und von da in eine Drehbewegung der Trommel 81 umgelenkt wird. Die Trommel 81 ist ebe nfalls über Lagerzapfen 102 und 103 in entsprechenden Rollenlagern 104 und 105 im Gehäuse 80 gelagert. Auch diese Lager sind durch Deckel 106 und 107 und entsprechende O-Ring-Dichtungen 108 und 109 hermetisch abgedichtet.

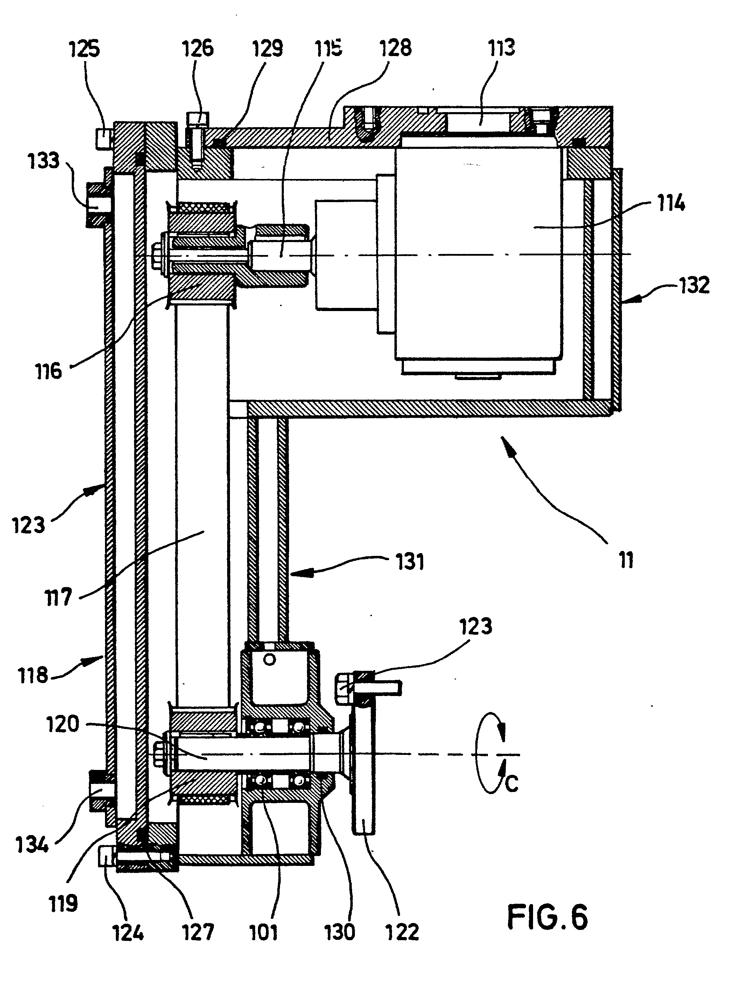

An dieses Schwenkgehäuse schließt sich nach unten hin das Getriebegehäuse 11 an, welches, wie bereits erwähnt, drehfest mit der Trommel 81 verbunden ist. Das Getriebegehäuse ist in einem Längsschnitt in Figur 6 dargestellt und wird im folgenden beschrieben. Der Wellenfortsatz 110 der Kardanwelle 78 ist durch eine Durchführung 111 und ein in dieser Durchführung 111 angeordnetes Gleitlager 112 (vgl. Figur 5) von oben durch eine Öffnung 113 in das Getriebegehäuse 11 hineingeführt. Dort wird die Antriebsbewegung über ein nicht näher gezeigtes Kegelradgetriebe 114 in eine Antriebsbewegung der Welle 115 umgeleitet. Auf dieser Welle ist ein Zahnriemenrad 116 befestigt. Die Drehbewegung der Welle 115 wird über einen Zahnriemen 117 durch einen vertikal gerichteten Gehäuseteil hindurch auf ein unteres Zahnriemenrad 119 übertragen, welches auf einer Welle 120 sitzt. Die Welle 120 ist durch das Gehäuse mittels eines Rollenlagers 121 hindurchgeführt. Auf die Welle 121 ist außerhalb des Gehäuses ein Flansch 122 aufgeschweißt.Mit Hilfe von Schrauben 123 wird der in der Figur 6 nicht gezeigte Brenner 4 dann auf den Flansch 122 aufgeschraubt und drehfest gehalten. Der Brenner kann dann über diesen Antrieb um die zweite Horizontalachse C, die durch die Welle 120 festgelegt ist, entsprechend verschwenkt werden.

Die Rückwand 123 des Getriebegehäuses 11 ist über Schrauben 124, 125, abnehmbar mit dem restlichen Gehäuse verbunden, so daß die Antriebselemente wie Zahnriemenräder 116, 119 der Zahnriemen 117 und das Winkelgetriebe 114 montiert werden können. Die Abdichtung der Rückwand 123 erfolgt über den O-Ring 127. Der Deckel 128 über den der Anschluß zum Schwenkgehäuse 10 herbeigeführt wird, ist ebenfalls abnehmbar (Schrauben 126) und ist ebenfalls über einen O-Ring 129 abgedichtet. Ein weiterer O-Ring 130 dichtet die Welle 120 ab, so daß das gesamte Getriebegehäuse 11 staub- und vakuumdicht abgedichtet ist.

Die Rückwand 123 ist doppelwandig ausgebildet ebenso wie die weiteren vertikal gerichteten Wände 131 und 132 des Getriebegehäuses 11. Im Betrieb strömt durch diese Doppelwände Kühlwasser, welches über die Anschlüsse 133 und 134 in das Getriebgehäuse 11 ein- bzw. wieder ausströmt.

Somit ist das Getriebegehäuse ebenfalls wassergekühlt. Die im Getriebegehäuse 11 untergebrachten Antriebselemente sind so gegenüber der in der vom Behälter 2 definierten Arbeitskammer erzeugten hohen Temperatur geschützt.

Nach dem Zusammenbau der einzelnen Teilgehäuse ist das innere Gehäuse 7 insgesamt vakuumdicht und hermetisch abgeschlossen und dann mit Argon gefüllt.

Das äußere Gehäuse 6 kann mit einer nicht näher gezeigten staubgeschützten Verbindungsleitung mit dem Innenraum des Behälters 2, also mit der Arbeitskammer, verbunden sein, so daß im äußeren Gehäuse 6 immer derselbe Druck wie im Behälter 2 vorliegt.

Zur Erzeugung einer Relativbewegung des Brenners 4 gegenüber dem Werkstück 3 kann nun über die oben beschriebenen Antriebssysteme jeweils in einer Bewegungsrichtung oder in einer überlagerten Bewegungsrichtung jede gewünschte Position des Brenners 4 eingestellt bzw. gesteuert werden. Aufgrund der gewählten Bewegungsachsen, nämlich der vertikalen Bewegungsrichtung (Pfeil A) und der beiden senkrecht zueinander weisenden horizontalen Bewegungsrichtungen B und C eignet sich der beschriebene Manipulator 5 insbesondere zum Handhaben eines Brenners 4, mit dem Turbinenschaufeln bespritzt werden sollen. Sämtliche Antriebssysteme sind gegenüber dem Behälterinnenraum hermetisch abgedichtet, so daß die Antriebssysteme nicht verschmutzen können. Der Behälterinnenraum bleibt dadurch auch frei von Ecken und Winkeln, die bei der Reinigung schwer zugänglich wären, so daß sich der Behälterinnenraum sehr einfach reinigen läßt. Insgesamt ist durch die Abkapselung der Antriebssysteme ein zuverlässiger und störungsfreier Betrieb des gesamten Manipulators gewährleistet.

Natürlich ist die Erfindung nicht auf die beschriebene Art und Weise der anhand der Figuren dargestellten Antriebsbewegungen für den Brenner beschränkt. Die Antriebsmechanik läßt sich ohne den Grundgedanken der Erfindung zu verlassen, selbstverständlich auch modifizieren. So können z.B. die zweite und dritte Antriebsgruppe derart modifiziert werden, daß der Plasmabrenner veränderte Bewegungen ausführt, z.B. eine Schwenkbewegung um die Achse 13 und eine Drehbewegung um die Vertikalachse 135. Die erste Antriebsgruppe zur Durchführung der Bewegung in Pfeilrichtung A kann dabei unverändert bleiben. Weitere Abänderungen sind ebenfalls möglich. So ist es beispielsweise für bestimmte Werkstücke nicht notwendig, drei Bewegungsfreiheitsgrade zu haben, so daß ggf. auch mit einer oder mit zwei Antriebsgruppen sich eine geeignete Beschichtung herbeiführen läßt. Durch vollständige Abkapselung dieser Antriebsgruppen gemäß der Erfindung ergeben sich dann ebenso wesentliche erfindungsgemäße Vorteile.

**Patentansprüche**

1. Vakuumplasmaspritzanlage mit einer Arbeitskammer(2), in der ein Werkstück (3) angeordnet werden kann, mit einer Einrichtung zur Erzeugung eines Vakuums in der Arbeitskammer, mit einem in der Arbeitskammer angeordneten Plasmabrenner (4), dessen Lage bezüglich des Werkstücks (3) über eine motorgetriebene Antriebsmechanik (5) und eine entsprechende Steuerung in wenigstens einer Bewegungsrichtung verändert werden kann, dadurch **gekennzeichnet**, daß die gesamte Antriebsmechanik (21, 43, 44) und die Steuerung (67, 72) hermetisch gegenüber der Arbeitskammer abgeschlossen in Gehäuseteilen (6, 7) eines Manipulators (5) untergebracht sind, der als Aufsatz an der Arbeitskammer (2) befestigt ist.

2. Vakuumplasmaspritzanlage nach Anspruch 2, dadurch **gekennzeichnet**, daß die Antriebsmechanik im Manipulator (5) drei Antriebsgruppen (21, 43, 44) umfaßt, von denen die erste Antriebsgruppe (21) eine Auf- und Abwärtsbewegung (A) des Brenners (4) zur Einstellung des Spritzabstandes, die zweite Antriebsgruppe (44) eine Schwenkbewegung (B) des Brenners (4) um eine erste Horizontalachse (12) und die dritte Antriebsgruppe (43) eine Schwenkbewegung (C) des Brenners (4) um eine zweite, senkrecht zur ersten weisenden Horizontalachse (13) ermöglicht.

3. Vakuumplasmaspritzanlage nach Anspruch 2, dadurch **gekennzeichnet**, daß der Manipulator (5) ein äußeres Gehäuse (6) und ein im äußeren Gehäuse (6) untergebrachtes inneres Gehäuse (7) aufweist, daß im inneren Gehäuse (7) die zweite und die dritte Antriebsgruppe (43, 44) hermetisch abgeschlossen angeordnet sind, wobei das innere Gehäuse (7) in die Arbeitskammer hineinragt und an dem in der Arbeitskammer gelegenen Ende den Brenner (4) trägt und daß die erste Antriebsgruppe (21) zumindest teilweise im äußeren Gehäuse (6) derart angeordnet ist, daß sie das innere Gehäuse (7) anheben oder absenken kann.

4. Vakuumplasmaspritzanlage nach Anspruch 3, dadurch **gekennzeichnet**, daß das innere Gehäuse mit einer Gewindespindel (25) und sich im äußeren Gehäuse (6) vertikal erstreckenden Gleitstangen (26) geführt ist und daß am äußeren Gehäuse (6) der Antriebsmotor (22) der ersten Antriebsgruppe (21) angeflanscht ist, dessen Antrieb über eine Drehdurchführung in den Innenraum des äußeren Gehäuses (6) hindurchgeführt ist und das innere Gehäuse durch Verdrehen der Gewindespindel (25) und unter Führung an der Führungsstange (26) anhebt und absenkt.

5. Vakuumplasmaspritzanlage nach Anspruch 4, dadurch **gekennzeichnet**, daß an der Drehvorrichtung in Axialrichtung beabstandete O-Ring-Dichtungen (29, 30) vorgesehen sind, zwischen denen eine Zwischenabsaugung (31) stattfinden kann.

6. Vakuumplasmaspritzanlage nach Anspruch 2, dadurch **gekennzeichnet**, daß das innere Gehäuse (7) folgende Teilgehäuse umfaßt:

ein Antriebsgehäuse (8), in dem die Antriebsmotoren (45), 56) der zweiten und dritten Antriebsgruppe (43, 44) sowie Steuersysteme (67, 68, 72, 73) für die Antriebsgruppen untergebracht sind,

ein sich zur Arbeitskammer hin anschließendes Zwischengehäuse (9), durch das Antriebswellen (52, 60) der beiden Antriebsgruppen verlaufen,

ein Schwenkgehäuse (10) mit einer zur zweiten Antriebsgruppe gehörenden Schwenkantriebsmechanik (81, 83, 84,86, 87) und

ein Getriebegehäuse (11) welches fest mit dem Schwenkgehäuse (10) verbunden ist und eine zur dritten Antriebsgruppe (43) gehörende Antriebsmechanik aufweist, wobei der Brenner (4) am Getriebegehäuse (11) um die zweite Horizontalachse (13) schwenkbar gelagert ist.

7. Vakuumplasmaspritzanlage nach Anspruch 6, dadurch **gekennzeichnet,** daß das Antriebsgehäuse (8), das Zwischengehäuse (9), das Schwenkgehäuse (10) und das Getriebegehäuse (11) jeweils vakuumdicht über Zwischenflansch (39, 76, 111) miteinander verbunden sind.

8. Vakuumplasmaspritzanlage nach Anspruch 6, dadurch **gekennzeichnet,** daß die zweite Antriebsgruppe (44) eine Antriebswelle (60) umfaßt, die vom Antriebsmotor (56) der zweiten Antriebsgruppe (44) über ein Zahnriemenrad (62) angetrieben wird und deren Drehbewegung im Schwenkgehäuse (10) mittels der Schwenkmechanik in Schwenkbewegungen (B) umgesetzt wird.

9. Vakuumplasmaspritzanlage nach Anspruch 8, dadurch **gekennzeichnet,** daß die Schwenkmechanik eine Spindel (83) umfaßt, die um eine Querachse (85) schwenkbar mit der Antriebswelle verbunden ist und die einen Schlitten (86) mit einem entsprechenden Innengewinde dreht, der in Lagerlaschen (87) um eine quer zur Spindelachse weisende Achse schwenkbar gelagert ist, wobei die Lagerlaschen (87) an einer im Inneren des Schwenkgehäuses (10) drehbar gegenüber einem äußeren Gehäuseteil (80) gelagerten Trommel (81) befestigt ist.

10. Vakuumplasmaspritzanlage nach Anspruch 2, dadurch **gekennzeichnet,** daß die dritte Antriebsgruppe (43) folgende Teile umfaßt: eine Antriebswelle (52), die vom Antriebsmotor (45) der dritten Antriebsgruppe über ein Zahnriemenrad (51) angetrieben wird und sich durch das Zwischengehäuse (9) hindurch in das Schwenkgehäuse (10) erstreckt, eine Kardanwelle (78), die die Antriebswelle durch das Schwenkgehäuse (10) hindurch fortsetzt und ein im Getriebegehäuse (11) angeordnetes Winkelgetriebe (114) mit Zahnriemenübersetzung (117), welche die Drehbewegung der Antriebswelle in eine Schwenkbewegung des Brenners (4) um die zweite Horizontalachse (C) umsetzt.

11. Vakuumplasmaspritzanlage nach Anspruch 6, dadurch **gekennzeichnet,** daß auf dem Behälter (2) ein Aufsatzflansch (14) ausgebildet ist, auf den das äußere Gehäuse (6) vakuumdicht aufgeflanscht ist und durch den sich hindurch das innere Gehäuse (7) mit seinen Teilgehäusen (8, 9, 10, 11) hindurch erstreckt und daß am Aufsatzflansch (14) ein nach innen in den Arbeitsraumgerichteter Faltenbalg (17) befestigt ist, der von außen vakuumdicht im Bereich des Flansches zwischen dem Zwischengehäuse (9) und dem Schwenkgehäuse (10) mit dem inneren Gehäuse (7) verbunden ist.

12. Vakuumplasmaspritzanlage nach Anspruch 11, dadurch **gekennzeichnet,** daß der Faltenbalg (17) sich seitlich etwa bis über das Schwenkgehäuse (10) erstreckt und mit einer kuppelartigen Einstülpung (19) an dem Flansch zwischen dem Zwischengehäuse (9) und dem Schwenkgehäuse (10) befestigt ist.

13. Vakuumplasmaspritzanlage nach wenigstens einem der Ansprüche 2 bis 12, dadurch **gekennzeichnet,**

daß sowohl das äußere Gehäuse (6) als auch das innere Gehäuse (7) zumindest teilweise doppelwandig ausgebildet und mit Anschlüssen (91, 133, 134) zum Durchfließen von Kühlwasser zwischen den Doppelwänden versehen ist.

14. Vakuumplasmaspritzanlage nach wenigstens einem der Ansprüche 2 bis 13, dadurch **gekennzeichnet,** daß der Innnraum des inneren Gehäuses (7) mit Edelgas, insbesondere mit Argon gefüllt ist.

15. Vakuumplasmaspritzanlage nach wenigstens einem der Ansprüche 2 bis 14, dadurch **gekennzeichnet,** daß der Innenraum des äußeren Gehäuses (6) staubgeschützt mit der Arbeitskammer druckverbunden ist.

16. Vakuumplasmaspritzanlage nach Anspruch 1, dadurch **gekennzeichnet,** daß die Antriebsmechanik drei Antriebsgruppen umfaßt, von denen die erste Antriebsgruppe (21) eine Auf- und Abwärtsbewegung (A) des Brenner (4) zur Einstellung des Spritzabstandes, die zweite Antriebsgruppe eine Schwenkbewegung des Brenners um eine Horizontalachse und die dritte Antriebsgruppe eine Drehbewegung um eine Vertikalachse ermöglicht.

**Claims**

1. A vacuum plasma spray plant comprising: a working chamber (2) in which a workpiece (3) can be disposed; means for generating a vacuum in the working chamber; a plasma torch (4) which is disposed in the working chamber and the position of which with respect to the workpiece (3) can be varied in at least one direction of movement via a motor-driven drive mechanism (5) and a corresponding control system, characterised in that the entire drive mechanism (21, 43, 44) and the control system (67, 72) are accommodated in parts (6, 7) of the housing of a manipulator (5) so as to be hermetically sealed off from the working chamber, said manipulator being fixed as an attachment on the working chamber (2).

2. A vacuum plasma spray plant according to claim 1, characterised in that the drive mechanism in the manipulator (5) comprises three drive assemblies (21, 43, 44) the first of which (21) allows an up and down movement (A) of the torch (4) for adjustment of the spraying distance, the second (44) allows a pivoting movement (B) of the torch (4) about a first horizontal axis (12) and the third (43) allows a pivoting movement (C) of the torch (4) about a second horizontal axis (13) extending perpendicularly to the first.

3. A vacuum plasma spray plant according to claim 2, characterised in that the manipulator (5) comprises an outer housing (6) and an inner housing (7) accommodated in the outer housing (6), the second and third drive assemblies (43, 44) are disposed in the inner housing (7) so as to be hermetically sealed off, the inner housing (7) projecting into the working chamber and bearing a torch (4) at its end situated in the working chamber, and the first drive assembly (21) is so disposed at least partially in the outer housing (6) as to be adapted to lift or lower the inner housing (7).

4. A vacuum plasma spray plant according to claim 3, characterised in that the inner housing is guided by a screw spindle (25) and sliding rods (26) extending vertically in the outer housing (6) and the drive motor (22) of the first drive assembly (21) is flanged on the outer housing (6) and its drive is taken through a rotary bushing into the interior of the outer housing (6) and raises and lowers the inner housing by turning of the screw spindle (25), guidance being provided along the guide rod (26).

5. A vacuum plasma spray plant according to claim 4, characterised in that axially spaced O-ring seals (29, 30) are provided on the rotary device, intermediate suction (31) being possible between said seals.

6. A vacuum plasma spray plant according to claim 2, characterised in that the inner housing (7) comprises the following sub-housings:

a drive housing (8) containing the drive motors (45, 56) of the second and third drive assemblies (43, 44) and control systems (67, 68, 72, 73) for the drive assemblies,

an intermediate housing (9) which adjoins the working chamber and through which there extend drive shafts (52, 60) of the two drive assemblies,

a pivoting housing (10) having a pivot drive mechanism (81, 83, 84, 86, 87) belonging to the second drive assembly and

a gearbox (11) which is rigidly connected to the pivoting housing (10) and comprises a drive mechanism belonging to the third drive assembly (43),

the torch (4) being mounted on the gearbox (11) so as to be pivotable about the second horizontal axis (13).

7. A vacuum plasma spray plant according to claim 6, characterised in that the drive housing (8), intermediate housing (9), pivoting housing (10) and gearbox (11) are interconnected so as to be vacuum-tight in each case by way of intermediate flanges (39, 76, 111).

8. A vacuum plasma spray plant according to claim 6, characterised in that the second drive assembly (44) comprises a drive shaft (60) which is driven by the drive motor (56) of the second drive assembly (44) via a toothed belt wheel (62) and the rotary movement of which is converted into pivoting movements (B) in the pivoting housing (10) by means of the pivoting mechanism.

9. A vacuum plasma spray plant according to claim 8, characterised in that the pivoting mechanism comprises a spindle (83) which is connected to the drive shaft so as to be pivotable about a transverse axis (85) and which rotates a slide (86) with a corresponding internal screwthread, said slide being mounted in bearing plates (87) so as to be pivotable about an axis extending transversely to the spindle axis, the bearing plates (87) being secured on a drum (81) mounted inside the pivoting housing (10) so as to be rotatable with respect to an outer housing part (80).

10. A vacuum plasma spray plant according to claim 2, characterised in that the third drive assembly (43) comprises the following parts:

a drive shaft (52) driven by the drive motor (45) of the third drive assembly via a toothed belt wheel (51) and extending through the intermediate housing (9) into the pivoting housing (10),

a cardan shaft (78) which forms a continuation of the drive shaft extending through the pivoting housing (10), and

a bevel gear (114) disposed in the gearbox (11) and having a toothed belt transmission (117) which converts the rotary movement of the drive shaft into a pivoting movement of the torch (4) about the second horizontal shaft (C).

11. A vacuum plasma spray plant according to claim 6, characterised in that an attachment flange (14) is formed on the container (2) and the outer housing (6) is flanged thereon to be vacuum-tight and the inner housing (7) extends therethrough by its sub-housings (8, 9, 10, 11), and a bellows (17) extending inwardly into the working chamber is secured to the attachment flange (14) and is connected to the inner housing (7) from the outside so as to be vacuum-tight in the region of the flange between the intermediate housing (9) and the pivoting housing (10).

12. A vacuum plasma spray plant according to claim 11, characterised in that the bellows (17) extends laterally approximately to over the pivoting housing (10) and is secured on the flange between the intermediate housing (9) and the pivoting housing (10) by a dome-shaped recess (19).

13. A vacuum plasma spray plant according to at least one of claims 2 t o12, characterised in that both the outer housing (6) and the inner housing (7) are at leats partially of double-walled construction and have connections (91, 133, 134) for a throughflow of cooling water between the double walls.

14. A vacuum plasma spray plant according to at least one of claims 2 to 13, characterised in that the interior of the inner housing (7) is filled with an inert gas, more particularly argon.

15. A vacuum plasma spray plant according to at least one of claims 2 to 14, characterised in that the interior of the outer housing (6) is pressure-connected to the working chamber so as to be dustproof.

16. A vacuum plasma spray plant according to claim 1, characterised in that the drive mechanism comprises three drive assemblies, the first of which (21) allows an up and down movement (A) of the torch (4) for adjustment of the spraying distance, the second assembly allows a pivoting movement of the torch about a horizontal axis and the third drive assembly allows a rotary movement about a vertical axis.

## Revendications

1. Installation de pulvérisation de plasma sous vide comprenant une chambre de travail (2) dans laquelle une pièce (3) peut être disposée, un dispositif de production d'un vide dans la chambre de travail, un chalumeau à plasma (4) qui est disposé dans la chambre de travail, dont la position par rapport à la pièce (3) peut être modifiée au moins dans une direction de déplacement par l'intermédiaire d'une mécanique d'entraînement (5) entraînée par moteur et d'une commande correspondante, caractérisée en ce que l'ensemble de la mécanique d'entraînement (21, 43, 44) et la commande (67, 72) sont logées dans des parties de boîtier (6, 7) d'un manipulateur (5) rapporté sur la chambre de travail (2) en étant isolées hermétiquement par rapport à la chambre de travail.

2. Installation de pulvérisation de plasma sous vide selon la revendication 2, caractérisée en ce que la mécanique d'entraînement dans le manipulateur (5) comprend trois groupes d'entraînement (21, 43, 44) dont le premier (21) permet un mouvement ascendant et descendant (A) du chalumeau (4) pour régler la distance de pulvérisation, le deuxième (44) permet un mouvement de pivotement (B) du chalumeau (4) autour d'un premier axe horizontal (12) et le troisième (43) un mouvement de pivotement (C) du chalumeau (4) autour d'un deuxième axe horizontal (13) perpendiculaire au premier.

3. Installation de pulvérisation de plasma sous vide selon la revendication 2, caractérisée en ce que le manipulateur (5) présente un boîtier extérieur (6) et un boîtier intérieur (7) logé dans le boîtier extérieur (6), en ce que le deuxième et le troisième groupes d'entraînement (43, 44) sont disposés dans le boîtier intérieur (7) en étant fermés hermétiquement, le boîtier intérieur (7) pénétrant dans la chambre de travail et portant le chalumeau à l'extrémité située dans la chambre de travail et en ce que le premier groupe d'entraînement (21) est disposé dans le boîtier extérieur (6) au moins partiellement de telle manière qu'il puisse soulever ou faire descendre le boîtier intérieur (7).

4. Installation de pulvérisation de plasma sous vide selon la revendication 3, caractérisée en ce que le boîtier intérieur est guidé par une broche filetée (25) et des barres coulissantes (25) s'étendant verticalement dans le boîtier extérieur (6) et en ce que le moteur d'entraînement (22) du premier groupe d'entraînement (21) est rapporté par bride sur le boîtier extérieur (6) et son dispositif d'entraînement est guidé par un passage tournant dans l'espace intérieur du boîtier extérieur (6) et soulève et fait descendre le troisième boîtier par rotation de la broche filetée (25) et avec guidage sur la barre de guidage (26).

5. Installation de pulvérisation de plasma sous vide selon la revendication 4, caractérisée en ce que des joints toriques (29, 30) entre lesquels une aspiration intermédiaire (31) peut avoir lieu, sont prévus sur le dispositif de rotation en étant espacés en direction axiale.

6. Installation de pulvérisation de plasma sous vide selon la revendication 2, caractérisée en ce que le boîtier intérieur (7) comprend les boîtiers partiels suivants: un boîtier d'entraînement (8) dans lequel sont logés les moteurs d'entraînement (45, 56) des deuxième et troisième groupes d'entraînement (43, 44) ainsi que des systèmes de commande (67, 68, 72, 73) pour les groupes d'entraînement, un boîtier intermédiaire (9) se raccordant à la chambre de travail et traversé par des arbres d'entraînement (52, 60) des deux groupes d'entraînement, un boîtier de pivotement (10) comportant une mécanique de pivotement (81, 83, 84, 86, 87) appartenant au deuxième groupe d'entraînement et un boîtier d'engrenage (11) qui est relié de manière fixée au boîtier de pivotement (10) et présente une mécanique d'entraînement appartenant au troisième groupe d'entraînement (43), le chalumeau (4) étant monté sur le boîtier d'engrenage (11) de manière à pouvoir pivoter autour du deuxième axe horizontal (13).

7. Installation de pulvérisation de plasma sous vide selon la revendication 6, caractérisée en ce que le boîtier d'entraînement (8), le boîtier intermédiaire (9), le boîtier de pivotement (10) et le boîtier d'engrenage (11) sont reliés entre eux de manière étanche au vide par des brides intermédiaires (39, 76, 111).

8. Installation de pulvérisation de plasma sous vide selon la revendication 6, caractérisée en ce que le deuxième groupe d'entraînement (44) comprend un arbre d'entraînement (60) qui est entraîné par le moteur d'entraînement (56) du deuxième groupe d'entraînement (44) par une roue à courroie dentée (62) et dont le mouvement de rotation dans le boîtier de pivotement (10) est transformé à l'aide de la mécanique de pivotement en mouvements de pivotement (B).

9. Installation de pulvérisation de plasma sous vide selon la revendication 8, caractérisée en ce que la mécanique de pivotement comprend une broche (83) qui est reliée à l'arbre d'entraînement de manière à pouvoir pivoter autour d'un axe transversal (85) et fait tourner un chariot (86) qui est muni d'un taraudage correspondant et est monté dans des brides de montage (87) de manière à pouvoir pivoter autour d'un axe orienté transversalement à l'axe de la broche, les brides de montage (87) étant fixées sur un tambour (81) monté à l'intérieur du boîtier de pivotement (10) de manière à pouvoir effectuer une rotation par rapport à une partie de boîtier extérieure (80).

10. Installation de pulvérisation de plasma sous vide selon la revendication 2, caractérisée en ce que le troisième groupe d'entraînement (43) comprend les pièces suivantes: un arbre d'entraînement (52) qui est entraîné par le moteur d'entraînement (45) du troisième groupe d'entraînement par l'intermédiaire d'une roue à courroie dentée (51) et pénètre dans le boîtier de pivotement (10) après avoir traversé le boîtier intermédiaire (9), un arbre cardan (78) qui prolonge l'arbre d'entraînement à travers le boîtier de pivotement (10) et un engrenage angulaire (114) avec transmission à courroie dentée (117) qui est disposé dans le boîtier d'engrenage (11) et transforme le mouvement de rotation de l'arbre d'entraînement en un mouvement de pivotement du chalumeau (4) autour du deuxième axe horizontal (C).

11. Installation de pulvérisation de plasma sous vide, caractérisée en ce qu'il est réalisé sur le conteneur (2) une bride de fixation (14) sur laquelle le boîtier extérieur (6) est rapporté de manière étanche au vide et à travers laquelle s'étend le boîtier intérieur (7) avec ses boîtiers partiels (8, 9, 10, 11) et en ce qu'un soufflet (17) qui est orienté vers l'intérieur dans la chambre de travail et est relié de l'extérieur de manière étanche au vide au boîtier intérieur (7), dans la zone de la bride entre le boîtier intermédiaire (9) et le boîtier de pivotement (10), est fixé sur la bride de fixation (14).

12. Installation de pulvérisation de plasma sous vide selon la revendication 11, caractérisée en ce que le soufflet (17) s'étend latéralement à peu près jusqu'au delà du boîtier de pivotement (10) et est fixé par une pièce emboutie en forme de coupole (19) sur la bride entre le boîtier intermédiaire (9) et le boîtier de pivotement (10).

13. Installation de pulvérisation de plasma sous vide selon l'une au moins des revendications 2 à 12, caractérisée en ce que tant le boîtier extérieur (6) que le boîtier intérieur (7) sont réalisés au moins partiellement avec une double paroi et sont munis de raccords (91, 133, 134) pour le passage d'eau de refroidissement entre les parois doubles.

14. Installation de pulvérisation de plasma sous vide selon l'une au moins des revendications 2 à 13, caractérisée en ce que l'espace intérieur du boîtier intérieur (7) est rempli de gaz rare, en particulier d'argon.

15. Installation de pulvérisation de plasma sous vide selon au moins l'une des revendications 2 à 14, caractérisée en ce que l'espace intérieur du boîtier extérieur (6) est relié par pression à la chambre de travail en étant protégé de la poussière.

16. Installation de pulvérisation de plasma sous vide selon la revendication 1, caractérisée en ce que la mécanique d'entraînement comprend trois groupes d'entraînement dont le premier (21) permet un mouvement ascendant et descendant (A) du chalumeau (4) pour régler la distance de pulvérisation, le deuxième permet un mouvement de pivotement du chalumeau autour d'un axe horizontal et le troisième un ouvmeent de rotation autour d'un axe vertical.

FIG.1

FIG. 2

FIG.3

EP 0 262 235 B1

FIG. 4

FIG.5

FIG.6